# EUROPEAN PATENT APPLICATION

(11) **EP 3 073 770 A1**
(43) Date of publication of application: **28.09.2016**
(21) Application number: 13898761.5
(22) Date of filing: 05.12.2013
(51) Int. Cl.: H04W 4/22

(54) **SECURITY CONTROL METHOD FOR EUICC, AND EUICC**

(71) Applicant: Huawei Device Co., Ltd., Shenzhen, Guangdong 518129 (CN)
(72) Inventor: LONG, Shuiping, Shenzhen Guangdong 518129 (CN)
(74) Representative: Gill Jennings & Every LLP
(86) International application number: PCT/CN2013/088693
(87) International publication number: WO 2015/081545

(57) **Abstract**

Embodiments of the present invention disclose a security control method for an eUICC, including: verifying, by an embedded integrated circuit card eUICC, whether a subscription manager-secure routing SM-SR entity is authorized to manage the eUICC; and if yes, establishing, by the eUICC, a secure transmission channel with the SM-SR entity, where the secure transmission channel is used for management interaction of the eUICC. The embodiments of the present invention further disclose an eUICC. Security of the eUICC can be ensured by using the present invention.

## Description

### TECHNICAL FIELD

The present invention relates to the communications field, and in particular, to a security control method for an eUICC and an eUICC.

### BACKGROUND

There is an embedded UICC (universal integrated circuit card) (also referred to as a USIM card, a SIM card, or an RUIM card) in an M2M communications system. The so-called embedded means that the UICC card, the USIM card, the SIM card, or the RUIM card is directly welded or embedded into a circuit board of an M2M terminal, instead of being inserted into the M2M terminal by using a card holder. Such an embedded card is generally needed for shock proof, M2M terminal miniaturization, or the like, and a card of this type is referred to as an eUICC (embedded UICC).

An M2M terminal is usually located in the outdoors, a remote place, or a hostile environment. Because an eUICC is embedded into user equipment, it is difficult to perform a replacement operation. Therefore, a network subscription change of the M2M terminal becomes a problem, so that a method for remotely and securely configuring network access credential information on an eUICC is urgently needed, and a capability of performing a network subscription change from one MNO (mobile network operator) to another MNO is needed.

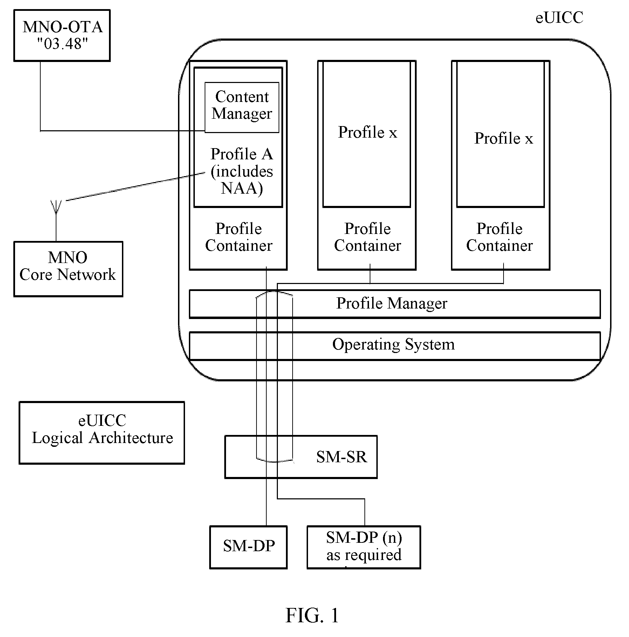

FIG. 1 is an eUICC system architecture that is relatively accepted by all parties in a current discussion by standards organizations. An SM refers to a subscription manager (subscription manager), DP refers to data preparation (data preparation), and SR refers to secure routing (secure routing). A profile (profile) is a combination of a file structure, data, and an application. A file and/or an application (such as a network access application) of an enabled profile (enabled profile) may be selected by using a UICC-Terminal interface. One type of profile is referred to as a provisioning profile (provisioning profile). After being installed in an eUICC, the provisioning profile may be used to access a communications network, so as to provide a transmission capability for eUICC management and profile management that are between the eUICC and a remote entity (such as SM-SR or SM-DP). One type of profile is referred to as an operational profile (operational profile), and the operational profile includes one or more network access applications and associated network access credentials. An SM-DP entity is responsible for generating a profile (profile), and downloading and installing the profile in the eUICC. The SM-DP may also be referred to as a profile installer (profile installer). An SM-SR entity is responsible for managing the profile in the eUICC, and is also responsible for ensuring security of communication between the eUICC and the remote entity (such as SM-SR or SM-DP). The SM-SR may also be referred to as a profile manager (profile manager). An MNO (mobile network operator) needs to request a profile related service or an eUICC related service from the SM-SR and the SM-DP, for example, subscribe to a profile from the SM-DP, and request the SM-SR to perform management (for example, an operation such as changing a profile status or deleting the profile) on the profile in the eUICC. The eUICC may be subscribed by any one of a communications module provider, a terminal provider, a network operator, or an M2M industry customer from an eUICC provider, and the eUICC is embedded into an M2M terminal (also referred to as user equipment). It should be noted that the eUICC is not only applicable to the M2M terminal but also applicable to a non-M2M terminal or a traditional terminal, such as a smartphone. The eUICC facilitates diverse ID (industrial designer) design of the smartphone, and also facilitates a user in conveniently subscribing to a new operator. The applicant finds that a current eUICC-based communications system does not provide a method for performing security control on an eUICC in user equipment.

### SUMMARY

To resolve a technical problem, the present invention provides a security control method for an eUICC and an eUICC, which can ensure security of the eUICC.

To resolve the foregoing technical problem, a first aspect of the present invention provides a security control method for an eUICC, including:
verifying, by an embedded integrated circuit card eUICC, whether a subscription manager-secure routing SM-SR entity is authorized to manage the eUICC; and
if yes, establishing, by the eUICC, a secure transmission channel with the SM-SR entity, where the secure transmission channel is used for management interaction of the eUICC.

With reference to the first aspect, in a first possible implementation manner, a step of the verifying, by an eUICC, whether an SM-SR entity is authorized to manage the eUICC includes:
if the eUICC authenticates, according to a public key infrastructure PKI mechanism, that the SM-SR entity is a valid entity, verifying, by the eUICC according to first authorization information stored by the eUICC, whether the SM-SR entity is authorized to manage the eUICC; or
verifying, by the eUICC according to a symmetric key mechanism, whether the SM-SR entity is authorized to manage the eUICC.

With reference to the first aspect, in a second possible implementation manner, the method further includes:
verifying, by the eUICC, whether a subscription manager-data preparation SM-DP entity is authorized to manage the eUICC; and
if yes, establishing, by the eUICC, a key set between the eUICC and the SM-DP entity, where the key set is used to protect a profile profile provisioning operation performed by the SM-DP on the eUICC.

With reference to the second possible implementation manner, in a third possible implementation manner, a step of the verifying, by the eUICC, whether an SM-DP entity is authorized to manage the eUICC includes:
if the eUICC authenticates, according to a public key infrastructure PKI mechanism, that the SM-DP entity is a valid entity, verifying, by the eUICC according to second authorization information stored by the eUICC, whether the SM-DP entity is authorized to manage the eUICC; or
verifying, by the eUICC according to a symmetric key mechanism, whether the SM-DP entity is authorized to manage the eUICC.

With reference to the first possible implementation manner, in a fourth possible implementation manner, the first authorization information includes:
at least one identifier of an SM-SR entity, where the SM-SR entity corresponding to the identifier is authorized to perform a management operation on the eUICC; or
at least one authorization token, where an SM-SR entity that has the at least one authorization token is authorized to perform a management operation on the eUICC.

With reference to the first or the fourth possible implementation manner, in a fifth possible implementation manner, the first authorization information is stored in:
a profile management credential PMC of the eUICC, or a first PKI certificate of the eUICC.

With reference to the second possible implementation manner, in a sixth possible implementation manner, the second authorization information includes:
at least one identifier of an SM-DP entity, where the SM-DP entity corresponding to the identifier is authorized to perform a Profile provisioning operation on the eUICC; or
at least one authorization token, where an SM-DP entity that has the at least one authorization token is authorized to perform a management operation on the eUICC.

With reference to the third or the sixth possible implementation manner, in a seventh possible implementation manner, the second authorization information is stored in:
a profile installer credential PIC of the eUICC, or a second PKI certificate of the eUICC.

With reference to the first or the third possible implementation manner, in an eighth possible implementation manner, the method further includes:
receiving, by the eUICC, new first authorization information or second authorization information by using the SM-SR entity; or
receiving, by the eUICC, a new symmetric key by using the SM-SR entity.

With reference to the first or the third possible implementation manner, in a ninth possible implementation manner, the method further includes:
generating, by the eUICC, new first authorization information or second authorization information by negotiating with an attached public land mobile network PLMN; or
generating, by the eUICC, a new symmetric key by negotiating with an attached public land mobile network PLMN.

Correspondingly, a second aspect of the present invention further provides an eUICC, including:
a first module, configured to verify whether a subscription manager-secure routing SM-SR entity is authorized to manage the eUICC; and
a second module, configured to: if a verification result of the first module is yes, establish a secure transmission channel with the SM-SR entity.

With reference to the second aspect, in a first possible implementation manner, the first module is configured to:
if it is authenticated, according to a public key infrastructure PKI mechanism, that the SM-SR entity is a valid entity, verify, according to first authorization information stored by the eUICC, whether the SM-SR entity is authorized to manage the eUICC; or
verify, according to a symmetric key mechanism, whether the SM-SR entity is authorized to manage the eUICC.

With reference to the second aspect, in a second possible implementation manner, the eUICC further includes:
a third module, configured to verify whether a subscription manager-data preparation SM-DP entity is authorized to manage the eUICC; and
a fourth module, configured to: if a verification result of the third module is yes, establish a key set between the eUICC and the SM-DP entity, where the key set is used to protect a profile profile provisioning operation performed by the SM-DP on the eUICC.

With reference to the second possible implementation manner, in a third possible implementation manner, the third module is configured to:
if it is authenticated, according to a public key infrastructure PKI mechanism, that the SM-DP entity is a valid entity, verify, according to second authorization information stored by the eUICC, whether the SM-DP entity is authorized to manage the eUICC; or
verify, according to a symmetric key mechanism, whether the SM-DP entity is authorized to manage the eUICC.

With reference to the first possible implementation manner, in a fourth possible implementation manner, the first authorization information includes:
at least one identifier of an SM-SR entity, where the SM-SR entity corresponding to the identifier is authorized to perform a management operation on the eUICC; or
at least one authorization token, where an SM-SR entity that has the at least one authorization token is authorized to perform a management operation on the eUICC.

With reference to the first or the fourth possible implementation manner, in a fifth possible implementation manner, the first authorization information is stored in:
a profile management credential PMC of the eUICC, or a first PKI certificate of the eUICC.

With reference to the second possible implementation manner, in a sixth possible implementation manner, the second authorization information includes:
at least one identifier of an SM-DP entity, where the SM-DP entity corresponding to the identifier is authorized to perform a Profile provisioning operation on the eUICC; or
at least one authorization token, where an SM-DP entity that has the at least one authorization token is authorized to perform a management operation on the eUICC.

With reference to the third or the sixth possible implementation manner, in a seventh possible implementation manner, the second authorization information is stored in:
a profile installer credential PIC of the eUICC, or a second PKI certificate of the eUICC.

With reference to the first or the third possible implementation manner, in an eighth possible implementation manner, the eUICC further includes:
a fifth module, configured to generate new first authorization information or second authorization information by negotiating with an attached public land mobile network PLMN; or
generate a new symmetric key by negotiating with an attached public land mobile network PLMN.

With reference to the first or the third possible implementation manner, in a ninth possible implementation manner, the eUICC further includes:
a sixth module, configured to generate new first authorization information or second authorization information by negotiating with an attached public land mobile network PLMN; or
generate a new symmetric key by negotiating with an attached public land mobile network PLMN.

A third aspect of the present invention provides an eUICC that includes a processor and a memory, where the memory stores a set of program code, and the processor is configured to invoke the program code stored in the memory, so as to execute the following operations:
verifying whether a subscription manager-secure routing SM-SR entity is authorized to manage the eUICC; and
if a verification result of the first module is yes, establishing a secure transmission channel with the SM-SR entity.

With reference to the third aspect, in a first possible implementation manner, the executing, by the processor, a step of verifying whether an SM-SR entity is authorized to manage the eUICC includes:
if it is authenticated, according to a public key infrastructure PKI mechanism, that the SM-SR entity is a valid entity, verifying, according to first authorization information stored by the eUICC, whether the SM-SR entity is authorized to manage the eUICC; or
verifying, according to a symmetric key mechanism, whether the SM-SR entity is authorized to manage the eUICC.

With reference to the third aspect, in a second possible implementation manner, the processor is further configured to:
verify whether a subscription manager-data preparation SM-DP entity is authorized to manage the eUICC; and
if yes, establish a key set between the eUICC and the SM-DP entity, where the key set is used to protect a profile profile provisioning operation performed by the SM-DP on the eUICC.

With reference to the second possible implementation manner, in a third possible implementation manner, the executing, by the processor, a step of verifying whether an SM-DP entity is authorized to manage the eUICC includes:
if the eUICC authenticates, according to a public key infrastructure PKI mechanism, that the SM-DP entity is a valid entity, verifying, by the eUICC according to second authorization information stored by the eUICC, whether the SM-DP entity is authorized to manage the eUICC; or
verifying, by the eUICC according to a symmetric key mechanism, whether the SM-DP entity is authorized to manage the eUICC.

With reference to the first possible implementation manner, in a fourth possible implementation manner, the first authorization information includes:
at least one identifier of an SM-SR entity, where the SM-SR entity corresponding to the identifier is authorized to perform a management operation on the eUICC; or
at least one authorization token, where an SM-SR entity that has the at least one authorization token is authorized to perform a management operation on the eUICC.

With reference to the first or the fourth possible implementation manner, in a fifth possible implementation manner, the first authorization information is stored in:
a profile management credential PMC of the eUICC, or a first PKI certificate of the eUICC.

With reference to the second possible implementation manner, in a sixth possible implementation manner, the second authorization information includes:
at least one identifier of an SM-DP entity, where the SM-DP entity corresponding to the identifier is authorized to perform a Profile provisioning operation on the eUICC; or
at least one authorization token, where an SM-DP entity that has the at least one authorization token is authorized to perform a management operation on the eUICC.

With reference to the third or the sixth possible implementation manner, in a seventh possible implementation manner, the second authorization information is stored in:
a profile installer credential PIC of the eUICC, or a second PKI certificate of the eUICC.

With reference to the first or the third possible implementation manner, in an eighth possible implementation manner, the processor is further configured to:
receive new first authorization information or second authorization information by using the SM-SR entity; or
receive a new symmetric key by using the SM-SR entity.

With reference to the first or the third possible implementation manner, in a ninth possible implementation manner, the processor is further configured to:
generate new first authorization information or second authorization information by negotiating with an attached public land mobile network PLMN; or
generate a new symmetric key by negotiating with an attached public land mobile network PLMN.

The following beneficial effects are brought by implementing the present invention:
An eUICC performs authorization verification on an external SM-SR entity, and if the authorization verification succeeds, the SM-SR entity is allowed to communicate with the eUICC. In addition, a secure data connection is established between the eUICC and the SM-SR entity, so as to ensure security of communication between the eUICC and the SM-SR entity, which can effectively prevent an external entity from attacking the eUICC.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a logical architecture diagram of an eUICC in the prior art;
FIG. 2 is a schematic flowchart of a security control method for an eUICC according to a first embodiment of the present invention;
FIG. 3A and FIG. 3B are a schematic flowchart of a security control method for an eUICC according to a second embodiment of the present invention;
FIG. 4 is a schematic flowchart of a security control method for an eUICC according to a third embodiment of the present invention;
FIG. 5 is a schematic flowchart of updating of a key and a token;
FIG. 6 is a schematic structural diagram of an eUICC according to a first embodiment of the present invention;
FIG. 7 is a schematic structural diagram of an eUICC according to a second embodiment of the present invention; and
FIG. 8 is a schematic structural diagram of an eUICC according to a third embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

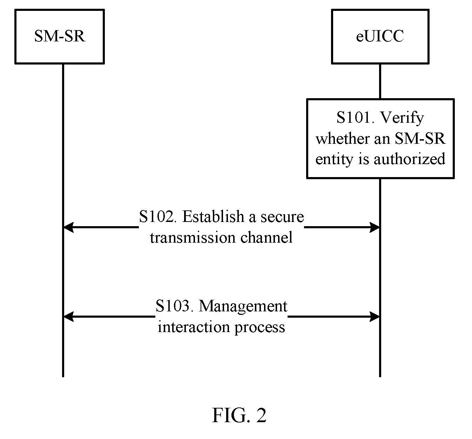

Refer to FIG. 2, which is a schematic flowchart of a security control method for an embedded universal integrated circuit card according to a first embodiment of the present invention. In this embodiment, the method includes:
S101. An eUICC verifies whether an SM-SR entity is authorized to manage the eUICC.

Specifically, when receiving a management request or command of the SM-SR entity, the eUICC verifies whether the SM-SR entity has permission to manage the eUICC. For example, when the eUICC receives a profile installation request sent by the SM-SR entity, the eUICC verifies whether the SM-SR is authorized to perform profile installation on the eUICC.

S102. Establish a secure transmission channel.

Specifically, after verifying that the SM-SR entity is authorized, the eUICC establishes the secure transmission channel with the SM-SR entity.

S103. Management interaction process.

Specifically, management interaction between the SM-SR entity and the eUICC is performed by using the established secure transmission channel.

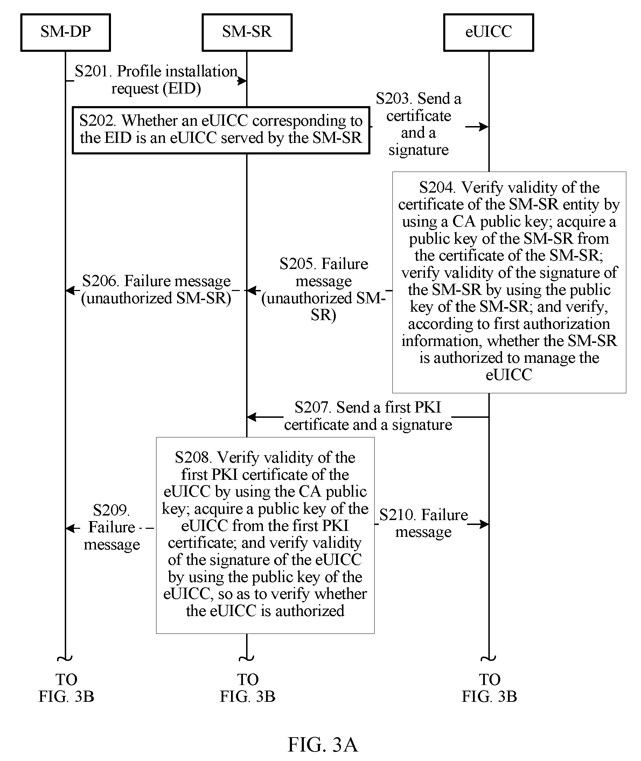

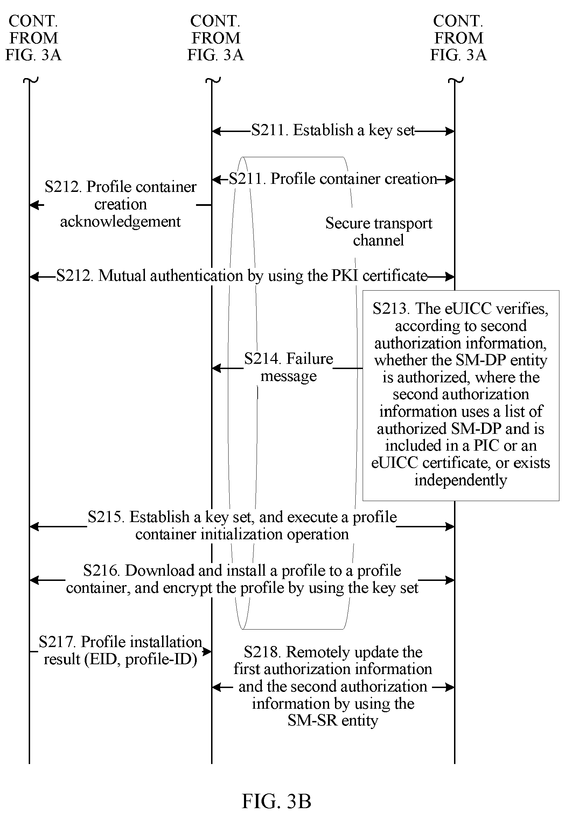

Refer to FIG. 3A and FIG. 3B, which are a schematic flowchart of a security control method for an embedded universal integrated circuit card according to a second embodiment of the present invention. In this embodiment, the method includes:
S201. An SM-DP entity sends a profile installation request to an SM-SR entity.

Specifically, the profile installation request carries an eUICC identifier (EID), where the eUICC identifier indicates an identity of an eUICC on which a profile installation operation needs to be performed.

S201. The SM-SR determines whether an eUICC corresponding to an EID is an eUICC served by the SM-SR.

Specifically, the SM-SR entity queries whether the eUICC corresponding to the eUICC identifier in the profile installation request is served by the SM-SR entity; and if no, returns a failure message to the SM-DP entity, and notifies the SM-DP entity that a service cannot be provided; or if yes, executes S203.

S203. The SM-SR entity sends a certificate and a signature to the eUICC.

Specifically, the SM-SR entity pre-stores a PKI certificate (hereinafter referred to as a certificate of the SM-SR entity) issued by a CA to the SM-SR entity, generates a signature, and sends the PKI certificate of the SM-SR entity and the signature to the eUICC corresponding to the eUICC identifier. Optionally, the SM-SR entity also sends an eUICC management operation type (for example, profile installation, profile downloading, profile enabling, profile disabling, profile status switching, profile deletion, or an associated SM-SR change) to the eUICC.

S204. The eUICC verifies validity of the certificate of the SM-SR entity by using a CA public key; acquires a public key of the SM-SR from the certificate of the SM-SR; verifies validity of the signature of the SM-SR by using the public key of the SM-SR; and verifies, according to first authorization information, whether the SM-SR is authorized to manage the eUICC.

Specifically, the eUICC verifies, by using the CA public key, whether the PKI certificate of the SM-SR is valid; if yes, acquires the public key of the SM-SR from the PKI certificate of the SM-SR entity, and verifies, by using the public key of the SM-SR entity, whether the signature of the SM-SR is valid; and if yes, determines that the SM-SR entity is a valid entity. Further, the eUICC verifies, according to the first authorization information, whether the SM-SR entity is authorized. The first authorization information may use a list of an authorized SM-SR identifier and is included in a PMC (profile management credential) of the eUICC or a first PKI certificate of the eUICC (for example, used as extension information in content of the certificate). The first PKI certificate of the eUICC is also a part of the PMC of the eUICC. If the SM-SR entity is authorized, S207 is executed, or if the SM-SR entity is not authorized, S205 is executed.

Optionally, it is assumed that the first authorization information is saved in the first PKI certificate of the eUICC, and that the PKI certificate is an X.509 certificate is used as an example, where the X.509 digital certificate includes the following contents:
version information of the certificate;
a serial number of the certificate, where each certificate has a unique certificate serial number;
a signature algorithm used by the certificate;
an issuer name of the certificate, where a naming rule generally uses an X.500 format;
a validity period of the certificate, where a universal certificate currently uses a UTC time format whose time range is 1950-2049;
a name of a certificate owner, where a naming rule generally uses the X.500 format;
a public key of the certificate owner;
a signature on the certificate from the certificate issuer; and
a certificate extension field (Authorized SM-SR list: SM-SR id-1).

An authorization information list is newly added into the extension field in the X.509 certificate, where the list includes an identifier (SM-SR id-1) of an authorized SM-SR entity. The eUICC determines whether the SM-SR entity is authorized according to whether the SM-SR entity is recorded in the authorization information list. Alternatively, the authorization information list may include identifiers of multiple SM-SR entities.

S205. The eUICC sends a failure message to the SM-SR entity, where the failure message carries an identifier of an unauthorized SM-SR entity.

S206. The SM-SR entity sends the failure message to the SM-DP entity.

S207. The eUICC sends the first PKI certificate of the eUICC and a corresponding signature to the SM-SR entity.

Specifically, the eUICC pre-stores the PKI certificate issued by the CA to the eUICC, and sends the first PKI certificate of the eUICC and the signature to the SM-SR entity.

S208. The SM-SR entity verifies validity of the first PKI certificate of the eUICC by using the CA public key; acquires a public key of the eUICC from the first PKI certificate of the eUICC; and verifies validity of the signature of the eUICC by using the public key of the eUICC, so as to verify whether the eUICC is authorized.

Specifically, a principle in which the SM-SR entity verifies whether the eUICC is valid is consistent with that in S204. If it is verified that the eUICC is authorized, S209 and S210 are executed; or if it is verified that the eUICC is authorized, S211 is executed.

S209. The SM-SR entity sends the failure message to the SM-DP entity, where the failure message carries the eUICC identifier.

S210. The SM-SR entity sends the failure message to the eUICC, where the failure message carries the eUICC identifier.

S211. Establish a secure transmission channel between the SM-SR entity and the eUICC.

Specifically, an interaction operation between the SM-SR entity and the eUICC is performed by using the established secure transmission channel, so as to protect security. In addition, the SM-SR creates a profile container (container) in the eUICC.

S212. The SM-DP entity and the eUICC perform mutual authentication by using the PKI certificate.

Specifically, the SM-DP entity and the eUICC verify validity of each other by using a PKI certificate and a signature that are sent by each other, and if the eUICC verifies that the SM-DP entity is a valid entity, S213 is executed.

S213. The eUICC verifies, according to second authorization information, whether the SM-DP entity is authorized, where the second authorization information uses a list of authorized SM-DP and is included in a PIC (profile installer credential) or an eUICC certificate, or exists independently. If the eUICC verifies that the SM-DP entity is authorized, S216 is executed; or if the eUICC verifies that the SM-DP entity is not authorized, S214 and S215 are executed.

S214. The eUICC sends the failure message to the SM-DP entity, where the failure message carries an identifier of the SM-DP entity.

S215. Establish a security key set between the SM-DP entity and the eUICC.

Specifically, a profile provisioning management operation between the SM-DP entity and the eUICC is protected by using the established security key set. For example, encrypted protection is performed on a profile, and encrypted protection is performed on a provisioning management command.

S216. The SM-DP entity and the eUICC execute profile download and installation operations to the profile container, and a related operation is encrypted by using the key set.

S217. The SM-DP entity sends a profile installation result to the SM-SR entity, where the profile installation result carries an identifier of an eUICC that is successfully installed and an identifier of the profile.

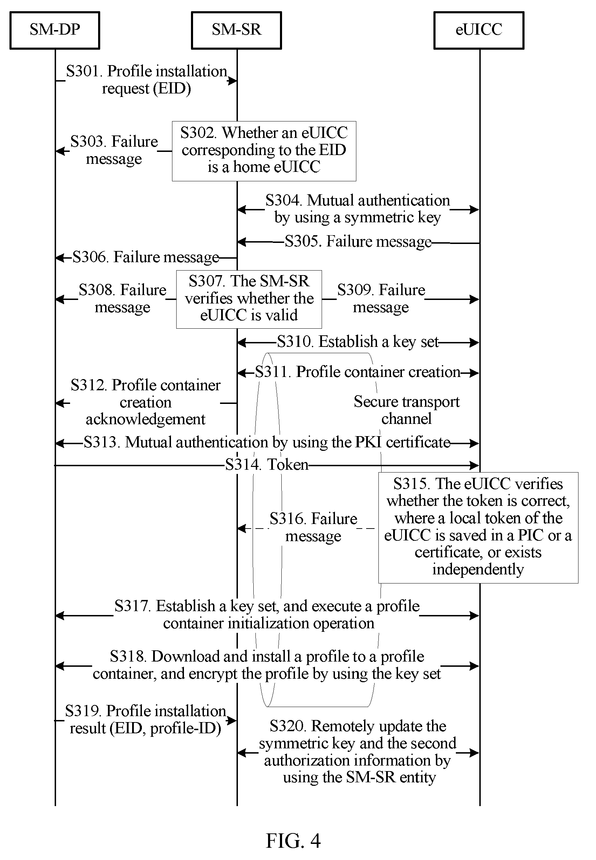

Refer to FIG. 4, which is a schematic flowchart of a security control method for an embedded universal integrated circuit card according to a third embodiment of the present invention. In this embodiment, the method includes:
S301. An SM-DP entity sends a profile installation request to an SM-SR entity.

Specifically, the profile installation request carries an eUICC identifier (EID), where the eUICC identifier indicates an identity of an eUICC on which a profile installation operation needs to be performed.

S302. The SM-SR entity queries whether an eUICC corresponding to an EID is a home eUICC.

Specifically, when being activated, the eUICC is registered with a corresponding SM-SR entity according to provisioning information stored in a profile. The SM-SR entity locally saves the eUICC identifier, where the eUICC is used as the home eUICC of the SM-SR entity. The SM-SR entity queries whether the eUICC corresponding to the eUICC identifier in the profile installation request is served by the SM-SR entity; if no, S303 is executed; or if yes, S304 is executed.

S303. The SM-SR entity returns a failure message to the SM-DP entity.

Specifically, the failure message carries the eUICC identifier, so as to notify the SM-DP that a service cannot be provided for the eUICC corresponding to the identifier.

S304. The SM-SR entity and the eUICC perform mutual authentication by using a symmetric key.

Specifically, if the mutual authentication between the SM-DP entity and the eUICC succeeds, it is determined that the SM-SR is authorized, and S307 is executed; or if the mutual authentication between the SM-DP entity and the eUICC fails, it is determined that the SM-SR is not authorized, and S305 and S306 are executed.

S305. The eUICC sends the failure message to the SM-SR entity, where the failure message carries an identifier of the SM-SR entity.

S306. The SM-SR entity sends the failure message to the SM-DP entity.

S307. The SM-SR verifies whether the eUICC is valid.

Specifically, if the mutual authentication between the SM-SR entity and the eUICC succeeds, it is determined that the eUICC is a valid entity (that is, the eUICC is served by the SM-SR entity), and S311 is executed; or if the mutual authentication between the SM-SR entity and the eUICC fails, it is determined that the eUICC is an invalid entity, and S309 and S310 are executed.

S308. The SM-SR entity sends the failure message to the SM-DP, where the failure message carries the eUICC identifier.

S309. The SM-SR entity sends the failure message to the eUICC, where the failure message carries the eUICC identifier.

S310. Establish a key set between the SM-SR entity and the eUICC.

Specifically, if the mutual authentication and mutual authorization between the SM-SR entity and the eUICC succeed, a secure transmission channel is established between the SM-SR entity and the eUICC, and the two entities communicate over the secure transmission channel. In addition, the key set is established between the SM-SR entity and the eUICC, so as to encrypt data exchanged between the SM-SR entity and the eUICC entity.

S311. Execute a profile container creation process between the SM-SR entity and the eUICC.

S312. The SM-SR entity sends a profile container creation acknowledgement message to the SM-DP entity, where the acknowledgement message carries an identifier of an eUICC in which a profile container is successfully created.

S313. The SM-DP entity and the eUICC perform mutual authentication by using a PKI certificate.

Specifically, the SM-DP entity and the eUICC verify validity of each other by using a PKI certificate and a signature that are sent by each other, and if the SM-DP entity verifies that the eUICC entity is a valid entity, S315 is executed.

S314. The SM-DP entity sends a token (Token) to the eUICC.

S315. The eUICC verifies whether the token sent by the SM-DP is correct. A local token of the eUICC is saved in a PIC (profile installer credential) or a second PKI certificate, or exists independently. The local token saved in the eUICC is referred to as second authorization information.

Specifically, the eUICC verifies, by using the locally saved second authorization information, whether the token is correct; if yes, it is determined that the SM-DP entity is authorized, and S317 is executed; or if no, S316 is executed. The second authorization information of the eUICC is included in the PIC or an eUICC certificate (used as extension information), or exists independently. For example, the authorization information is included in an X.509 certificate of the eUICC, and is in a form of a certificate extension field (SM-DP Token: Token1), which indicates that an SM-DP entity that has the Token 1 is authorized to perform management. It should be noted that SM-DP token information may include multiple tokens (Token 1, Token 2, ...), so as to separately authorize different management operation types. For example, the Token 1 is used to authorize a profile load management operation type, and a Token 2 is used to authorize a profile installation management operation type.

S316. The eUICC sends the failure message to the SM-DP entity, where the failure message carries an identifier of the SM-DP entity.

S317. Establish a key set between the SM-DP entity and the eUICC, and perform a related profile container initialization operation.

S318. Download and install a profile to a profile container, and encrypt the profile by using the key set.

S319. The SM-DP entity sends a profile installation result to the SM-SR entity, where the profile installation result carries an identifier of an eUICC in which a profile is successfully installed and an identifier of the profile.

S320. Remotely update the symmetric key and the second authorization information by using the SM-SR entity.

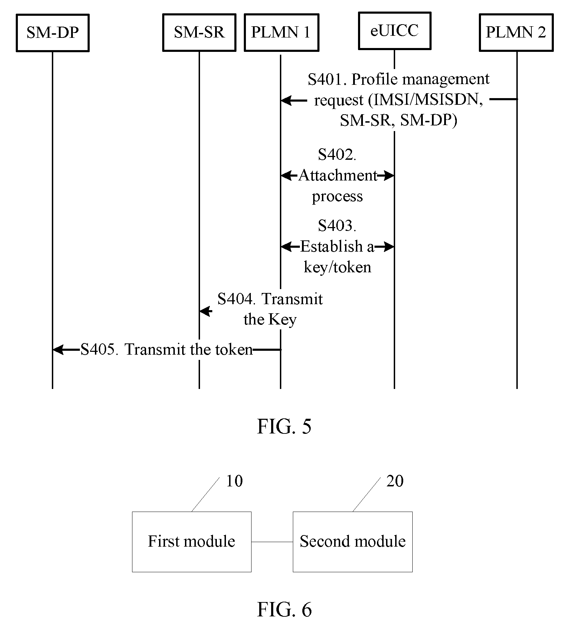

Refer to FIG. 5, which is a schematic flowchart of a method for updating a symmetric key and a token, the method includes:
S401. A PLMN 2 sends a profile management request to a PLMN 1, where the profile management request carries an eUICC identifier, an SM-SR identifier, and an SM-DP identifier.
S402. An attachment process.

Specifically, user equipment in which an eUICC is located attaches to the PLMN 1 by using a provisioning profile or an operational profile in the eUICC.

S403. Establish a symmetric key and second authorization information (which is specifically one or more tokens) between the PLMN 1 and the eUICC.

S404. The PLMN 1 transmits the symmetric key to an SM-SR entity.

S405. The PLMN 1 transmits the second authorization information to an SM-DP entity.

Refer to FIG. 6, which is a schematic structural diagram of an eUICC according to a first embodiment of the present invention. In this embodiment, the eUICC includes a first module 10 and a second module 20.

The first module 10 is configured to verify whether a subscription manager-secure routing SM-SR entity is authorized to manage the eUICC.

The second module 20 is configured to: if a verification result of the first module is yes, establish a secure transmission channel with the SM-SR entity.

This embodiment and the method embodiment 1 derive from a same idea, and technical effects brought by this embodiment and the method embodiment 1 are also the same. For details, refer to the descriptions of the method embodiment 1, and details are not described herein again.

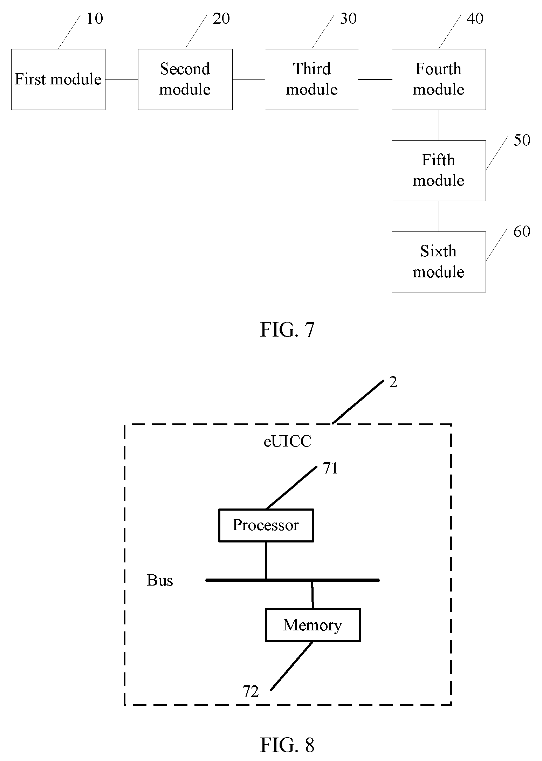

Refer to FIG. 7, which is a schematic structural diagram of an eUICC according to a second embodiment of the present invention. In this embodiment, in addition to the first module 10 and the second module 20, the eUICC further includes a third module 30, a fourth module 40, a fifth module 50, and a sixth module 60.

The third module 30 is configured to verify whether a subscription manager-data preparation SM-DP entity is authorized to manage the eUICC.

The fourth module 40 is configured to: if a verification result of the third module is yes, establish a key set between the eUICC and the SM-DP entity, where the key set is used to protect a profile profile provisioning operation performed by the SM-DP on the eUICC.

The fifth module 50 is configured to generate new first authorization information or second authorization information by negotiating with an attached public land mobile network PLMN; or
generate a new symmetric key by negotiating with an attached public land mobile network PLMN.
The sixth module 60 is configured to generate new first authorization information or second authorization information by negotiating with an attached public land mobile network PLMN; or
generate a new symmetric key by negotiating with an attached public land mobile network PLMN.

Optionally, the first module 10 is configured to:
if it is authenticated, according to a public key infrastructure PKI mechanism, that the SM-SR entity is a valid entity, verify, according to first authorization information stored by the eUICC, whether the SM-SR entity is authorized to manage the eUICC; or
verify, according to a symmetric key mechanism, whether the SM-SR entity is authorized to manage the eUICC.
Optionally, the third module 30 is configured to:
if it is authenticated, according to a public key infrastructure PKI mechanism, that the SM-DP entity is a valid entity, verify, according to second authorization information stored by the eUICC, whether the SM-DP entity is authorized to manage the eUICC; or
verify, according to a symmetric key mechanism, whether the SM-DP entity is authorized to manage the eUICC.

This embodiment and the method embodiments 2 to 4 derive from a same idea, and technical effects brought by this embodiment and the method embodiments 2 to 4 are also the same. For details, refer to the descriptions of the foregoing embodiments, and details are not described herein again.

Refer to FIG. 8, which is a schematic structural diagram of an eUICC according to a third embodiment of the present invention. Hereinafter, the eUICC is referred to as an eUICC 1. The eUICC 1 includes a processor 71 and a memory 72. There may be one or more processors 71 in the eUICC1. FIG. 8 uses one processor as an example. In some embodiments of the present invention, the processor 71 and the memory 72 may be connected by using a bus or other manners; and a bus connection is used as an example in FIG. 8.

The memory 72 stores a set of program code, and the processor 71 is configured to invoke the program code stored in the memory 72, so as to execute the following operations:
verifying whether a subscription manager-secure routing SM-SR entity is authorized to manage the eUICC; and
if a verification result of the first module is yes, establishing a secure transmission channel with the SM-SR entity.
In some embodiments of the present invention, the executing, by the processor 61, a step of verifying whether an SM-SR entity is authorized to manage the eUICC includes:
if it is authenticated, according to a public key infrastructure PKI mechanism, that the SM-SR entity is a valid entity, verifying, according to first authorization information stored by the eUICC, whether the SM-SR entity is authorized to manage the eUICC; or
verifying, according to a symmetric key mechanism, whether the SM-SR entity is authorized to manage the eUICC.
In some embodiments of the present invention, the processor 61 is further configured to:
verify whether a subscription manager-data preparation SM-DP entity is authorized to manage the eUICC; and
if yes, establish a key set between the eUICC and the SM-DP entity, where the key set is used to protect a profile profile provisioning operation performed by the SM-DP on the eUICC.
In some embodiments of the present invention, the executing, by the processor 61, a step of verifying whether an SM-DP entity is authorized to manage the eUICC includes:
if the eUICC authenticates, according to a public key infrastructure PKI mechanism, that the SM-DP entity is a valid entity, verifying, by the eUICC according to second authorization information stored by the eUICC, whether the SM-DP entity is authorized to manage the eUICC; or
verifying, by the eUICC according to a symmetric key mechanism, whether the SM-DP entity is authorized to manage the eUICC.
In some embodiments of the present invention, the first authorization information includes:
at least one identifier of an SM-SR entity, where the SM-SR entity corresponding to the identifier is authorized to perform a management operation on the eUICC; or
at least one authorization token, where an SM-SR entity that has the at least one authorization token is authorized to perform a management operation on the eUICC.
In some embodiments of the present invention, the first authorization information is stored in:
a profile management credential PMC of the eUICC, or a first PKI certificate of the eUICC.
In some embodiments of the present invention, the second authorization information includes:
at least one identifier of an SM-DP entity, where the SM-DP entity corresponding to the identifier is authorized to perform a Profile provisioning operation on the eUICC; or
at least one authorization token, where an SM-DP entity that has the at least one authorization token is authorized to perform a management operation on the eUICC.
In some embodiments of the present invention, the second authorization information is stored in:
a profile installer credential PIC of the eUICC, or a second PKI certificate of the eUICC.
In some embodiments of the present invention, the processor 61 is further configured to:
receive new first authorization information or second authorization information by using the SM-SR entity; or
receive a new symmetric key by using the SM-SR entity.
In some embodiments of the present invention, the processor 61 is further configured to:
generate new first authorization information or second authorization information by negotiating with an attached public land mobile network PLMN; or
generate a new symmetric key by negotiating with an attached public land mobile network PLMN.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What is disclosed above is merely exemplary embodiments of the present invention, and certainly is not intended to limit the protection scope of the present invention. A person of ordinary skill in the art may understand that all or some of processes that implement the foregoing embodiments and equivalent modifications made in accordance with the claims of the present invention shall fall within the scope of the present invention.

## Claims

1. A security control method for an eUICC, comprising:
verifying, by an embedded integrated circuit card eUICC, whether a subscription manager-secure routing SM-SR entity is authorized to manage the eUICC; and
if yes, establishing, by the eUICC, a secure transmission channel with the SM-SR entity, wherein the secure transmission channel is used for management interaction of the eUICC.

2. The method according to claim 1, wherein a step of the verifying, by an eUICC, whether an SM-SR entity is authorized to manage the eUICC comprises:
if the eUICC authenticates, according to a public key infrastructure PKI mechanism, that the SM-SR entity is a valid entity, verifying, by the eUICC according to first authorization information stored by the eUICC, whether the SM-SR entity is authorized to manage the eUICC; or
verifying, by the eUICC according to a symmetric key mechanism, whether the SM-SR entity is authorized to manage the eUICC.

3. The method according to claim 1, further comprising:
verifying, by the eUICC, whether a subscription manager-data preparation SM-DP entity is authorized to manage the eUICC; and
if yes, establishing, by the eUICC, a key set between the eUICC and the SM-DP entity, wherein the key set is used to protect a profile profile provisioning operation performed by the SM-DP on the eUICC.

4. The method according to claim 3, wherein a step of the verifying, by the eUICC, whether an SM-DP entity is authorized to manage the eUICC comprises:
if the eUICC authenticates, according to a public key infrastructure PKI mechanism, that the SM-DP entity is a valid entity, verifying, by the eUICC according to second authorization information stored by the eUICC, whether the SM-DP entity is authorized to manage the eUICC; or
verifying, by the eUICC according to a symmetric key mechanism, whether the SM-DP entity is authorized to manage the eUICC.

5. The method according to claim 2, wherein the first authorization information comprises:
at least one identifier of an SM-SR entity, wherein the SM-SR entity corresponding to the identifier is authorized to perform a management operation on the eUICC; or
at least one authorization token, wherein an SM-SR entity that has the at least one authorization token is authorized to perform a management operation on the eUICC.

6. The method according to claim 2 or 5, wherein the first authorization information is stored in:
a profile management credential PMC of the eUICC, or a first PKI certificate of the eUICC.

7. The method according to claim 3, wherein the second authorization information comprises:
at least one identifier of an SM-DP entity, wherein the SM-DP entity corresponding to the identifier is authorized to perform a profile provisioning operation on the eUICC; or
at least one authorization token, wherein an SM-DP entity that has the at least one authorization token is authorized to perform a management operation on the eUICC.

8. The method according to claim 4 or 7, wherein the second authorization information is stored in:
a profile installer credential PIC of the eUICC, or a second PKI certificate of the eUICC.

9. The method according to claim 2 or 4, further comprising:
receiving, by the eUICC, new first authorization information or second authorization information by using the SM-SR entity; or
receiving, by the eUICC, a new symmetric key by using the SM-SR entity.

10. The method according to claim 2 or 4, further comprising:
generating, by the eUICC, new first authorization information or second authorization information by negotiating with an attached public land mobile network PLMN; or
generating, by the eUICC, a new symmetric key by negotiating with an attached public land mobile network PLMN.

11. An eUICC, comprising:
a first module, configured to verify whether a subscription manager-secure routing SM-SR entity is authorized to manage the eUICC; and
a second module, configured to: if a verification result of the first module is yes, establish a secure transmission channel with the SM-SR entity.

12. The eUICC according to claim 11, wherein the first module is configured to:
if it is authenticated, according to a public key infrastructure PKI mechanism, that the SM-SR entity is a valid entity, verify, according to first authorization information stored by the eUICC, whether the SM-SR entity is authorized to manage the eUICC; or
verify, according to a symmetric key mechanism, whether the SM-SR entity is authorized to manage the eUICC.

13. The eUICC according to claim 11, further comprising:
a third module, configured to verify whether a subscription manager-data preparation SM-DP entity is authorized to manage the eUICC; and
a fourth module, configured to: if a verification result of the third module is yes, establish a key set between the eUICC and the SM-DP entity, wherein the key set is used to protect a profile profile provisioning operation performed by the SM-DP on the eUICC.

14. The eUICC according to claim 13, wherein the third module is configured to:
if it is authenticated, according to a public key infrastructure PKI mechanism, that the SM-DP entity is a valid entity, verify, according to second authorization information stored by the eUICC, whether the SM-DP entity is authorized to manage the eUICC; or
verify, according to a symmetric key mechanism, whether the SM-DP entity is authorized to manage the eUICC.

15. The eUICC according to claim 12, wherein the first authorization information comprises:
at least one identifier of an SM-SR entity, wherein the SM-SR entity corresponding to the identifier is authorized to perform a management operation on the eUICC; or
at least one authorization token, wherein an SM-SR entity that has the at least one authorization token is authorized to perform a management operation on the eUICC.

16. The eUICC according to claim 12 or 15, wherein the first authorization information is stored in:
a profile management credential PMC of the eUICC, or a first PKI certificate of the eUICC.

17. The eUICC according to claim 13, wherein the second authorization information comprises:
at least one identifier of an SM-DP entity, wherein the SM-DP entity corresponding to the identifier is authorized to perform a Profile provisioning operation on the eUICC; or
at least one authorization token, wherein an SM-DP entity that has the at least one authorization token is authorized to perform a management operation on the eUICC.

18. The eUICC according to claim 14 or 17, wherein the second authorization information is stored in:
a profile installer credential PIC of the eUICC, or a second PKI certificate of the eUICC.

19. The eUICC according to claim 12 or 14, further comprising:
a fifth module, configured to generate new first authorization information or second authorization information by negotiating with an attached public land mobile network PLMN; or
generate a new symmetric key by negotiating with an attached public land mobile network PLMN.

20. The eUICC according to claim 12 or 14, further comprising:
a sixth module, configured to generate new first authorization information or second authorization information by negotiating with an attached public land mobile network PLMN; or
generate a new symmetric key by negotiating with an attached public land mobile network PLMN.

21. An eUICC, comprising a processor and a memory, wherein the memory stores a set of program code, and the processor is configured to invoke the program code stored in the memory, so as to execute the following operations:
verifying whether a subscription manager-secure routing SM-SR entity is authorized to manage the eUICC; and
if a verification result of the first module is yes, establishing a secure transmission channel with the SM-SR entity.

22. The method according to claim 21, wherein the executing, by the processor, a step of verifying whether an SM-SR entity is authorized to manage the eUICC comprises:
if it is authenticated, according to a public key infrastructure PKI mechanism, that the SM-SR entity is a valid entity, verifying, according to first authorization information stored by the eUICC, whether the SM-SR entity is authorized to manage the eUICC; or
verifying, according to a symmetric key mechanism, whether the SM-SR entity is authorized to manage the eUICC.

23. The eUICC according to claim 21, wherein the processor is further configured to:
verify whether a subscription manager-data preparation SM-DP entity is authorized to manage the eUICC; and
if yes, establish a key set between the eUICC and the SM-DP entity, wherein the key set is used to protect a profile profile provisioning operation performed by the SM-DP on the eUICC.

24. The eUICC according to claim 23, wherein the executing, by the processor, a step of verifying whether an SM-DP entity is authorized to manage the eUICC comprises:
if the eUICC authenticates, according to a public key infrastructure PKI mechanism, that the SM-DP entity is a valid entity, verifying, by the eUICC according to second authorization information stored by the eUICC, whether the SM-DP entity is authorized to manage the eUICC; or
verifying, by the eUICC according to a symmetric key mechanism, whether the SM-DP entity is authorized to manage the eUICC.

25. The eUICC according to claim 22, wherein the first authorization information comprises:
at least one identifier of an SM-SR entity, wherein the SM-SR entity corresponding to the identifier is authorized to perform a management operation on the eUICC; or
at least one authorization token, wherein an SM-SR entity that has the at least one authorization token is authorized to perform a management operation on the eUICC.

26. The eUICC according to claim 22 or 25, wherein the first authorization information is stored in:
a profile management credential PMC of the eUICC, or a first PKI certificate of the eUICC.

27. The eUICC according to claim 23, wherein the second authorization information comprises:
at least one identifier of an SM-DP entity, wherein the SM-DP entity corresponding to the identifier is authorized to perform a Profile provisioning operation on the eUICC; or
at least one authorization token, wherein an SM-DP entity that has the at least one authorization token is authorized to perform a management operation on the eUICC.

28. The eUICC according to claim 24 or 27, wherein the second authorization information is stored in:
a profile installer credential PIC of the eUICC, or a second PKI certificate of the eUICC.

29. The eUICC according to claim 22 or 24, wherein the processor is further configured to:
receive new first authorization information or second authorization information by using the SM-SR entity; or
receive a new symmetric key by using the SM-SR entity.

30. The eUICC according to claim 22 or 24, wherein the processor is further configured to:
generate new first authorization information or second authorization information by negotiating with an attached public land mobile network PLMN; or
generate a new symmetric key by negotiating with an attached public land mobile network PLMN.
